(19) Europäisches Patentamt
European Patent Office
Office européen des brevets

(11) **EP 2 184 863 B1**

(12) **EUROPEAN PATENT SPECIFICATION**

(45) Date of publication and mention
of the grant of the patent:
**09.05.2018 Bulletin 2018/19**

(21) Application number: **08783830.6**

(22) Date of filing: **31.07.2008**

(51) Int Cl.:
*H04B 7/005* (2006.01)   *H04W 52/08* (2009.01)
*H04W 52/44* (2009.01)   *H04W 52/14* (2009.01)
*H04W 52/10* (2009.01)

(86) International application number:
**PCT/CN2008/071837**

(87) International publication number:
**WO 2009/015612 (05.02.2009 Gazette 2009/06)**

(54) **METHOD FOR CONTROLLING ENHANCED UPLINK POWER**

VERFAHREN ZUR REGELUNG DER LEISTUNG DER ERWEITERTEN AUFWÄRTSSTRECKE

PROCÉDÉ DE COMMANDE DE PUISSANCE DE LIAISON MONTANTE ÉVOLUÉE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **01.08.2007 CN 200710135701**

(43) Date of publication of application:
**12.05.2010 Bulletin 2010/19**

(73) Proprietor: **ZTE Corporation
Guangdong Province 518057 (CN)**

(72) Inventors:
• **CHEN, Hui**
**Shenzhen City, Guangdong Province 518057 (CN)**
• **ZHANG, Yincheng**
**Shenzhen City, Guangdong Province 518057 (CN)**
• **LIU, Hu**
**Shenzhen City, Guangdong Province 518057 (CN)**

(74) Representative: **Murgitroyd & Company
Scotland House
165-169 Scotland Street
Glasgow G5 8PL (GB)**

(56) References cited:
**CN-A- 1 770 655       CN-A- 1 797 982
CN-A- 1 852 041       US-A1- 2004 203 981
US-A1- 2006 035 660   US-A1- 2006 152 285**

• **3RD GENERATION PARTNERSHIP PROJECT:
'Technical Specification Group Radio Access
Network; Physical Layer procedures (FFD)' 3GPP
TS 25.214 V7.3.0 December 2006, pages 14 - 27,
XP008130015**

**Description**

Technical Field

The present invention relates to wireless communication field, and in particular, to a method for controlling enhanced uplink power in a Time Division-Synchronous Code Division Multiple Access (TD-SCDMA) system.

Background of the Invention

3GPP (3rd Generation Partnership Project) has accomplished the standardization work for an enhanced uplink access system in a TD-SCDMA system. An enhanced uplink access system is generally called as HSUPA (High Speed Uplink Packet Access), which is intended to improve uplink efficiency by means of advanced techniques in order to effectively support web browse, videos, multi-media information and other services based on Internet Protocol (IP).
According to different ways of scheduling, HSUPA service is divided into scheduling service and non-scheduling service, wherein resource of the non-scheduling service is allocated to a UE (User Equipment) by SRNC (Servicing Radio Network Controller), and the resource has periodicity and is suitable for real-time services. In the scheduling service, the resource pool of enhanced uplink is allocated to a Node B (base station) by SRNC, and Node B allocates resources to individual UE. In each TTI (Transmit Time Interval), if both scheduling resources and non-scheduling resources exist, the UE can only select one kind of resources to transmit the corresponding data.
A new transmission channel of E-DCH (Enhanced-uplink Dedicated Transmission Channel) for carrying the enhanced uplink data is added in HSUPA, and the TTI (Transmission Time Interval) of the E-DCH is 5ms. The packet mapped to the E-DCH is called as MAC-e PDU (enhanced media access control protocol data unit), which includes one or more MAC-d (dedicated media access control) flows.
Physical channels associated with E-DCH are:

E-UCCH (enhanced uplink control channel), which is a physical layer control channel and is carried in a physical layer indication domain of an E-PUCH (E-DCH physical uplink channel), where control information includes E-TFCI (enhanced uplink transmission format indication for indicating length of the current transmission block and modulation means), HARQ (hybrid automatic repeat request) information (including process identifier ID and retransmission times information);

E-AGCH (E-DCH absolute grant channel), which is a control channel used for Node B to transmit the grant information to the UE in a scheduling service;

E-PUCH (E-DCH physical uplink channel, also called as enhanced physical uplink channel), which is a service channel used for the UE (User Equipment) to carry E-DCH transmission channel data, where information related to aided scheduling is also transmitted in this channel;

E-RUCCH (E-DCH random access uplink control channel, i.e., enhanced uplink random access uplink control channel), which is a physical layer control channel used to transmit the information related to aided scheduling when UE has not been granted, where E-RUCCH uses random access physical channel resources;

E-HICH (E-DCH hybrid automatic repeat request indication channel), which is a physical layer control channel used for Node B to carry HARQ indication information.

In an enhanced uplink access system, an open loop aided method for controlling closed loop power is adopted for an E-PUCH channel, and the process for controlling power is as follows:
Power of a transmitting terminal of E-PUCH is:

$$P_{E\text{-}PUCH} = P_{e\text{-}base} + L + \beta_e$$

wherein, $P_{E\text{-}PUCH}$ is transmitting power of the E-PUCH channel; L is a path loss obtained by a UE from a beacon channel; $\beta_e$ is a sum of power offset corresponding to the length of a transmission block, spread spectrum code compensation and power offset of a MAC-d flow where a top priority logical channel exists in MAC-e PDU; and $P_{e\text{-}base}$ is a closed loop power control value maintained by the UE, and its specific calculation formula is:

$$P_{e-base} = PRX_{des\_base} + step * \sum_i TPC_i = PRX_{des\_base} + P_{TPC}$$

wherein $PRX_{des\_base}$ is a reference expected receiving power configured by a high layer of network for the UE, and is an open loop power control value; *step* is a step length for the closed loop power control, which is configured by a high layer of network for the UE; TPC (transmission power control) is a closed loop power control command, and may be "UP" or "DOWN". When a received TPC command is "UP", $\Delta_{e-base}$ is added to $P_{e-base}$; when a received TPC command is "DOWN", $\Delta_{e-base}$ is subtracted from $P_{e-base}$. $\Delta_{e-base}$ is a step length "step" of the closed loop power control. The symbol "$\sum$" in the formula means accumulation effect of TPC, i.e., TPC commands received during one TTI should be operated on a latest stored $P_{e-base}$.

When a UE initially sends E-PUCH or resumes sending after a period of pause, the UE performs open loop power control, and $P_{e-base}$ is configured as $PRX_{des\_base}$; afterwards, enters closed loop power control status, and $P_{e-base}$ is controlled by a TPC command delivered by Node B.

At Node B of the receiving terminal, the receiving power= $\boldsymbol{P_{E\text{-}PUCH}}$ - $\boldsymbol{L'}$ = $\boldsymbol{P_{e-base}}$ + $L$ + $\beta_e$ - $L'$,

wherein, L' is an actual path loss value, and other parameters are the same as above. Node B can obtain $\beta_e$ according to length of transmission block, spread spectrum code and information about the transmitted MAC-d flow. Control of Node B on the closed loop power is only directed to E value as follows:

$$E = P_{e-base} + L - L'$$

when E is higher than the expected receiving power of Node B, Node B sends a closed loop power control command "DOWN" to the UE; when E is lower than the expected receiving power of Node B, Node B sends "UP" to the UE.

The above process for controlling E-PUCH power applies to both scheduling services and non-scheduling services. In the current protocol, the processes for controlling E-PUCH closed loop power in a scheduling service and a non-scheduling service are independent from each other. TPC commands in a scheduling service are carried on an E-AGCH channel; TPC commands in a non-scheduling service are carried on an E-HICH channel. When an E-DCH link is initially established, a high layer of network configures a reference expected receiving power $PRX_{des\_base}$ for a UE, and this value applies to both scheduling services and non-scheduling services; in the process of data transmission, a UE maintains a $P_{e-base}$ value for a scheduling service and a non-scheduling service respectively. In a scheduling service, Node B performs scheduling and allocation of resources according to factors including priority level of each UE and resource status of a cell, and thus it has no periodicity and sometimes there may be a long period of pause. When a UE re-obtains scheduling resources after a period of pause, it can only performs open loop power control, i.e., the reference expected receiving power $PRX_{des\_base}$ configured by a high layer of network is used as the initial value of $P_{e-base}$. Since $PRX_{des\_base}$ is selected by a SRNC for the UE, only slow reconfiguration can be implemented; meanwhile understanding of the SRNC on a wireless environment is all from measurement report of Node B, its adaptive ability to the link is limited. As described above, a scheduling service is suitable for non-real time services, and pauses are more likely to occur in the servicing process, thus causing a high probability of using open loop power control and making it impossible to achieve optimal link adaptation.

Patent document US2004/203981 A1 discloses an uplink power control method with link adaptation in an enhanced general packet radio service system.

Summary of the Invention

The technical problem to be solved in the present invention is to provide a method for controlling enhanced uplink power to improve adaptive ability to the link. This need may be met by the subject matter according to the independent claim. Advantageous embodiments of the present invention are set forth in the dependent claims.

In the method for controlling enhanced uplink power provided in the present invention, the same closed-loop power control value $P_{e-base}$ is maintained for a scheduling service and a non-scheduling service on the same carrier, thus greatly enhancing the adaptive ability of transmission of a scheduling service to a link, effectively reducing uplink interference and improving transmission efficiency.

Brief Description of Drawings

FIG. 1 is an illustration for a controlling process with a TPC command in the prior art;

FIG. 2(a) is an illustration that a closed-loop power control parameter $P_{e-base}$ is controlled by a TPC command when a carrier only has the scheduling service;

FIG. 2(b) is an illustration that a closed-loop power control parameter $P_{e-base}$ is controlled by a TPC command when a carrier only has the non-scheduling service;

FIG. 2(c) is an illustration that a closed-loop power control parameter $P_{e-base}$ is controlled by a TPC command when a carrier has both the scheduling service and the non-scheduling service according to the present invention;

FIG. 3 is an illustration for power control when a UE has only one kind of service (scheduling service) on a carrier;

FIG. 4 is an illustration for power control when a UE has both the scheduling service and the non-scheduling service on a carrier according to the embodiments of the present invention;

FIG. 5 is an illustration for power control when a UE has both the scheduling service and the non-scheduling service on a carrier in a dynamic scheduling of carrier according to the embodiments of the present invention;

FIG. 6 is an illustration that both the scheduling service and the non-scheduling service on a carrier are in pause state.

Preferred Embodiments of the Present Invention

The current 3GPP TD-SCDMA system is a single-carrier system, and both scheduling and non-scheduling resources are on the single carrier. In order to simplify RRM (Radio Resource Management) algorithm, Node B does not distinguish specific uplink time slots when controlling closed loop power of E-PUCH channel, and when E-PUCH of a UE is distributed on a plurality of time slots, Node B can perform power control after averaging the interferences of the plurality of time slots. From this point, a UE having both scheduling service and non-scheduling service is totally able to maintain a $P_{e-base}$ value. Thus, even if scheduling resources pause for a certain period of time, $P_{e-base}$ can be continuously maintained during the process of transmitting a non-scheduling service, and when the UE re-obtains scheduling resources, it can use the latest $P_{e-base}$ for transmitting an E-PUCH channel, and thus can better adapt to the change of wireless environment.

In order to further increase the throughput of the system, a multi-carrier feature can be incorporated into the existing single-carrier enhanced uplink access system, and theoretically a N-carrier system will have a throughput N times larger than that of a single-carrier system. When incorporating a multi-carrier feature, there are several schemes of the architecture of the enhanced uplink access system, one is statically allocating one or more carrier resources for the UE, and Node B allocates only scheduling resources for the UE on these carriers; the other one is dynamically allocating scheduling resources. In these two architectures, for a UE having only single-carrier capability in the uplink, the system allocates the scheduling and non-scheduling resources of the UE on a single carrier; for a UE having multi-carrier capability in the uplink, the scheduling and non-scheduling resources will be allocated to one or more carriers, where a carrier may have both scheduling and non-scheduling services, or may have only one kind of services. The present invention applies to the situation in which a carrier supports both scheduling and non-scheduling transmissions.

A method for controlling enhanced uplink power provided by the present invention specifically comprises: when a service based on enhanced uplink access is performed, a user equipment (UE) maintaining a $P_{e-base}$ value for a scheduling service transmission and a non-scheduling service transmission on the same carrier, wherein the $P_{e-base}$ value is controlled by a closed loop power controlling command for the scheduling service transmission and non-scheduling service transmission on the carrier.

The specific process for the UE to maintain $P_{e-base}$ comprises the following steps of:

step 101, when an E-DCH link is initially established, a high layer of network configuring an E-PUCH reference expected receiving power $PRX_{des\_base}$ for each carrier to a UE;

the E-PUCH reference expected receiving power applies to transmissions of a scheduling service and a non-scheduling service on the carrier;

step 102, the UE maintaining a $P_{e-base}$ value inside, and when initially sending an E-PUCH, the UE performing open loop power control, the $P_{e-base}$ being configured as the reference expected receiving power $PRX_{des\_base}$ for the carrier on which the UE sends the E-PUCH;

when the E-PUCH is initially sent, what is performed may be a scheduling service, and also may be a non- scheduling service;

step 103, after entering a state of closed-loop power control, when the UE transmits a scheduling service on the carrier, the $P_{e\text{-base}}$ being controlled by a TPC command transmitted by the scheduling service, i.e., a TPC command on an E-AGCH channel; when the carrier transmits a non-scheduling service, the $P_{e\text{-base}}$ being controlled by a TPC command transmitted by the non-scheduling service, i.e., a TPC command on an E-HICH channel;

wherein in the state of closed-loop power control, the process for the TPC command on E-AGCH channel or E-HICH channel to control the $P_{e\text{-base}}$ comprises the following steps of:

step 201, when a received TPC command is "UP", a step length being added to the $P_{e\text{-base}}$; when a received TPC command is "DOWN", a step length being subtracted from the $P_{e\text{-base}}$.

wherein the step length is configured by a high layer of network for the UE.

202, the UE always storing for the carrier a $P_{e\text{-base}}$ value adjusted after the latest TPC command.

When a UE only has one kind of resources (scheduling or non-scheduling) on a carrier (hereinafter, the carrier on which a UE has scheduling or non-scheduling resources is referred to as a working carrier), i.e., only one kind of services is transmitted (scheduling or non-scheduling), if transmission of the service pauses and duration time of pause is larger than or equals to Tgap, the UE performs open loop power control when the service resumes transmission, and uses the E-PUCH reference expected receiving power $PRX_{des\_base}$ for the carrier configured by a high layer of network as a $P_{e\text{-base}}$ value; if the duration time of pause is lower than Tgap, the UE and Node B uses the latest $P_{e\text{-base}}$ value stored for the carrier to perform closed loop power control when transmission is resumed.

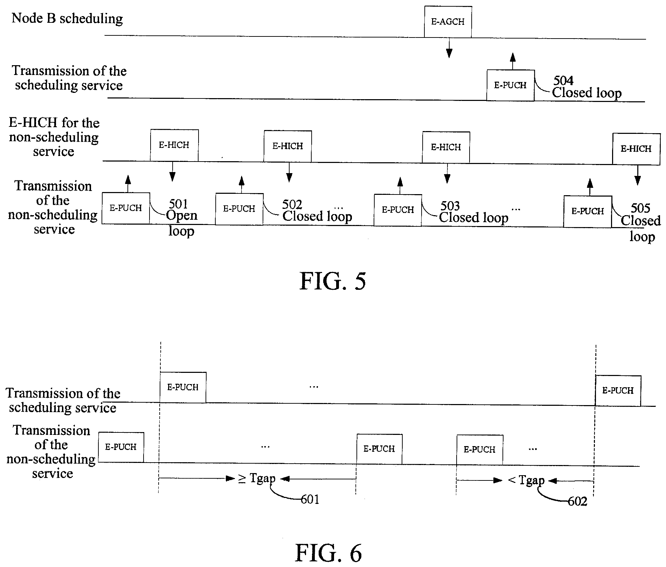

When a UE has both scheduling and non-scheduling resources on a single carrier, i.e., the UE can perform transmission of both scheduling service and non-scheduling service, if transmissions of both scheduling service and non-scheduling service pause, and duration time under the state in which both of the two services pause is larger than or equals to Tgap (as shown by 601 in FIG. 6), the UE performs open loop power control when transmission of one of the services is resumed, and uses the E-PUCH reference expected receiving power $PRX_{des\_base}$ for the carrier configured by a high layer of network as a $P_{e\text{-base}}$ value and then the UE and Node B enter a state of closed-loop power control.

When a UE has both scheduling and non-scheduling resources on a single carrier, i.e., the UE can perform transmission of both scheduling service and non-scheduling service, in the case that one of the two services pauses, or both scheduling service and non-scheduling service pause, and if only the duration time under the state in which both of the two services pause is lower than Tgap (as shown by 602 in FIG. 6), the UE and Node B use the latest $P_{e\text{-base}}$ value stored for the carrier to perform closed loop power control when transmission of one of the services is resumed.

Wherein the Tgap value is determined by the UE itself or is configured by the high layer of network.

The present invention will be further described in more detail taking a TD-SCDMA system as an example, taking both single-carrier system and multi-carrier system into consideration (actually, a single-carrier system is a special case of multi-carrier system, and thus description for multi-carrier system also applies to a single-carrier system).

The present invention comprises the following steps of:

Step 1: when establishing an E-DCH radio bearer for a UE, a high layer of network configuring parameters for E-PUCH power control, including E-PUCH reference expected receiving power $PRX_{des\_base}$ and step length for closed-loop power control.

As described in the section of Background of the Invention, $P_{e\text{-base}}$ is a closed-loop power control value, and its initial value is E-PUCH reference expected receiving power $PRX_{des\_base}$ configured by the high layer of network, which is a parameter for open-loop power control and is a value for uplink interference control; another component "power offset of a MAC-d flow where a logical channel with top priority exists in MAC-e PDU" in the transmitting power is a parameter for outer-loop power control, providing QoS (quality of service) assurance for data transmission in MAC-e PDU. When 3GPP designs a parameter for outer-loop power control of an enhanced uplink access system, the system provides the same parameter of power control for scheduling and non-scheduling services, and QoS control of scheduling and non-scheduling services depends on power offset of a MAC-d flow. Configuration for $PRX_{des\_base}$ and TPC step length is shown in Table 1.

Table 1 parameters for E-PUCH power control

| Information factors | Necessary or not | type | description |
|---|---|---|---|
| $PRX_{des\_base}$ | Necessary | Integer (-112..-50, step length is 1) | Unit dBm. |

(continued)

| Information factors | Necessary or not | type | description |
|---|---|---|---|
| TPC step length | Necessary | Integer (1, 2, 3) | Unit dB. |

Since $PRX_{des\_base}$ is an uplink interference control value, if a multi-carrier architecture is incorporated, a RNC (Radio Network Controller) configures these two parameters respectively for each possible working carrier of the UE, see Table 2.

Table 2 parameters for E-PUCH power control in a multi-carrier architecture

| Information factors | Necessary or not | type | description |
|---|---|---|---|
| Multi-carrier information: 1 to maximum number of carriers | | | Configuring different parameters for power control according to carrier configuration |
| > PRXdes_base | Necessary | Integer (-112..-50, step | Unit dBm. |
| | | length is 1) | |
| > TPC step length | Necessary | Integer (1, 2, 3) | Unit dB. |

The above factors are configured when the RNC establishes a radio bearer of E-DCH type for the UE, and the involved RRC (radio resource control) processes include: CELL UPDATE CONFIRM, HANDOVER TO UTRAN COMMAND, PHYSICAL CHANNEL RECONFIGURATION, RADIO BEARER RECONFIGURATION, RADIO BEARER RELEASE, RADIO BEARER SETUP, RRC CONNECTION SETUP, TRANSPORT CHANNEL RECONFIGURATION, etc. Node B needs to know these parameters when granting power for a scheduling service and performing closed loop power control, therefore, RNC needs to configure these parameters for Node B through processes including radio link setup, radio link addition and radio link reconfiguration in NBAP (Node B application part) protocol.

Step 2, when transmitting E-PUCH for the first time, the UE using open loop power control, and in a single-carrier system, the UE configuring $P_{e\text{-base}}$ to be the reference expected receiving power $PRX_{des\_base}$ configured by the high layer of network; in a multi-carrier system, the UE using the $PRX_{des\_base}$ of the carrier on which E-PUCH is sent as the initial $P_{e\text{-base}}$ value for the carrier.

The power for initial sending is $P_{E\_PUCH}=P_{e\text{-base}}+ L + \beta_e$.

Wherein, $P_{E\text{-PUCH}}$ is transmitting power of the E-PUCH channel; L is a path loss measured by a UE on a beacon channel (when no beacon channel exists on the carrier on which E-PUCH is transmitted, the UE will measure the path loss of the carrier on which a beacon channel is and convert onto the frequency on which E-PUCH is transmitted); $\beta_e$ is a sum of power offset corresponding to the length of a transmission block, spread spectrum code compensation and power offset of a MAC-d flow where a logical channel with top priority exists in MAC-e PDU; $P_{e\text{-base}}$ is taken as the $PRX_{des\_base}$ configured by the high layer.

The UE stores the $P_{e\text{-base}}$ value; in a multi-carrier system, for a UE that may transmits E-PUCH channel on a plurality of carriers (i.e., the UE has a plurality of working carriers), a plurality of $P_{e\_base}$ values need to be stored, and each working carrier independently maintains a $P_{e\text{-base}}$ value.

What is transmitted for at first may be scheduling service, or non-scheduling service, and when a TTI has both scheduling resources and non-scheduling resources, the UE selects one kind of resources for transmitting the corresponding service data.

Step 3, after the first transmission, the UE and Node B entering a state of closed loop power control. In a single-carrier system, if the UE has both scheduling service and non-scheduling service, $P_{e\text{-base}}$ value of the UE will be controlled by a TPC command in the process of transmitting a scheduling service and a TPC command in the process of transmitting a non-scheduling service; with regard to a multi-carrier system, when a carrier has both scheduling service and non-scheduling service, $P_{e\text{-base}}$ value for the carrier will be controlled by a TPC command in a scheduling service and a non-scheduling service on the carrier.

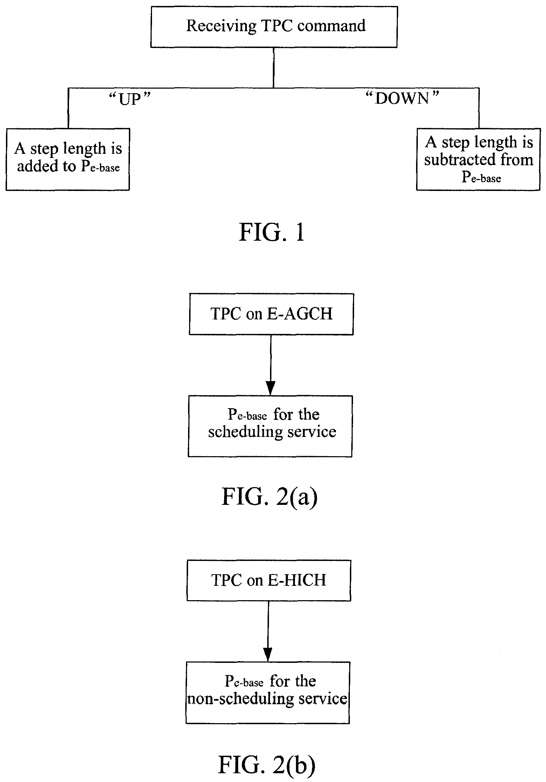

The controlling process with a TPC command is shown in FIG. 1. When a received TPC command is "UP", a step length is added to $P_{e\text{-base}}$; when a received TPC command is "DOWN", a step length is subtracted from $P_{e\text{-base}}$; $P_{e\text{-base}}$ does not change in other cases.

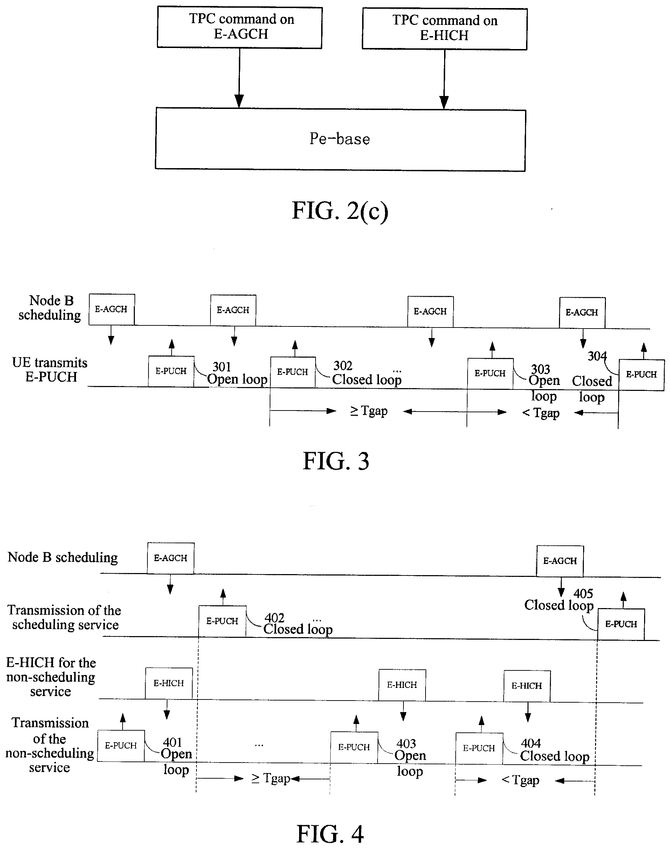

The TPC command of a scheduling service is carried on an E-AGCH channel and the TPC command of a non-scheduling service is carried on an E-HICH channel. In a multi-carrier system, a high layer will configure the corresponding relationship between the TPC commands on E-AGCH and E-HICH channels and E-PUCH power control on each carrier, i.e., TPC commands on which E-AGCH and E-HICH channels control power of E-PUCH on which carrier. In a single-carrier or multi-carrier system, for a UE, if a working carrier only performs a scheduling service or a non-scheduling service, then the $P_{e\text{-base}}$ value for the carrier will be only controlled by a TPC command during the process of transmitting the service; if a working carrier has both scheduling service and non-scheduling service, then only one $P_{e\text{-base}}$ value needs to be maintained for the carrier and is controlled by a TPC command during transmission of a scheduling service and a non-scheduling service. As shown in FIG. 2, wherein FIG. 2(a) shows closed loop power control in the case that a working carrier of a UE only has scheduling service; FIG. 2(b) shows closed loop power control in the case that a working carrier of a UE only has non-scheduling service; FIG. 2(c) shows closed loop power control in the case that a working carrier of a UE described in the present invention has both scheduling service and non-scheduling service. In FIG. 2, $P_{e\text{-base}}$ is a closed loop power control value maintained for the carrier.

In a state of closed-loop power control, a UE always stores a $P_{e\text{-base}}$ value adjusted by the latest TPC command. When a multi-carrier architecture is incorporated, a $P_{e\text{-base}}$ value is independently maintained for each working carrier, and for the $P_{e\text{-base}}$ value for each working carrier, the UE always maintains a $P_{e\text{-base}}$ value adjusted by the latest TPC command for the carrier. Since both power grant of a scheduling service and the process of closed loop power control of scheduling and non-scheduling services of Node B require tracking down change of $P_{e\text{-base}}$ of the UE, the same maintaining process also needs to be performed for the $P_{e\text{-base}}$ in the Node B, and each working carrier corresponding to a UE at the Node B maintains a $P_{e\text{-base}}$ value, which is consistent with the $P_{e\text{-base}}$ value at the UE. In the embodiments of the present invention, description is made mainly taking a UE side as a reference.

In a state of closed-loop power control, it is possible that temporary stop of service causes failure of closed-loop power control and thus reentering open-loop power control. Compared with the prior art, a $P_{e\text{-base}}$ is maintained for both scheduling and non-scheduling transmissions on a carrier in the present invention, therefore, the probability for a UE to enter open loop power control is greatly reduced.

Figure 3 is an illustration for power control when a UE has only one kind of services (scheduling services) on a carrier. If transmission of the service pauses, and duration time of pause is larger than or equals to Tgap (between 302 and 303 as shown in the figure), the UE performs open loop power control (303) when transmission of the service is resumed, and uses the E-PUCH reference expected receiving power $PRX_{des\_base}$ on the carrier as a $P_{e\text{-base}}$ value; if duration time is lower than Tgap (between 303 and 304 as shown in the figure), the UE and Node B perform closed loop power control when transmission is resumed, and the $P_{e\text{-base}}$ value in 303 is adjusted by a TPC command acquired from an E-AGCH channel to be a new $P_{e\text{-base}}$ value.

Figure 4 is an illustration for power control when a UE has both scheduling service and non-scheduling service on a carrier. If transmissions of both scheduling service and non-scheduling service pause, and duration time under the state in which both of the two services pause is larger than or equals to Tgap (between 402 and 403 as shown in the figure), the UE performs open loop power control (403 in the figure) when transmission of one of the services is resumed, and uses the E-PUCH reference expected receiving power $PRX_{des\_base}$ on the carrier configured by a high layer of network as a $P_{e\text{-base}}$ value and then enters the state of closed-loop power control.

In FIG. 4, if one of the services, or both of the services pause provided that duration time under the state in which both of the two services pause is lower than Tgap (between 404 and 405 in the figure), then a UE and Node B perform closed loop power control when transmission of one of the services is resumed as shown with 405 in the FIG. 4, and the $P_{e\text{-base}}$ value obtained in 404 is adjusted by a TPC command acquired from an E-AGCH channel by the UE.

Wherein, the Tgap value is determined by the UE itself or is configured by a high layer of network.

In a multi-carrier system, a UE has only one kind of services on a carrier in a certain period of time due to requirements for dynamic scheduling (as shown in FIG. 5, 501 and 503 perform a non-scheduling service in the figure), and a scheduling service is allocated to the carrier afterwards (shown by 504 in the figure). If the non-scheduling service is in a state of closed-loop power control at this moment, then when a scheduling service is transmitted in 504, a UE and Node B use the latest $P_{e\text{-base}}$ value stored for the carrier to perform closed loop power control.

In practical applications, since interferences are different in different cells, a high layer can inform a UE to use the method of the present invention or not with a signaling according to the interference condition of a cell and scheduling and non-scheduling time slot resources.

Industrial Applicability

The present invention provides a method of maintaining a closed-loop power control value $P_{e\text{-base}}$ by both scheduling and non-scheduling services through analyzing the characteristics of closed loop power control in the current enhanced uplink access system, thereby greatly enhancing the adaptive ability of transmission of a scheduling service to a link, effectively reducing uplink interference and improving transmission efficiency.

**Claims**

1. A method for controlling enhanced uplink power, **characterized by** comprising:

   when a service is performed based on enhanced uplink access, a user equipment (UE) maintaining a same one closed-loop power control $P_{e\text{-}base}$ value for both a scheduling service transmission and a non-scheduling service transmission using a same carrier resource, the $P_{e\text{-}base}$ value being controlled by both a closed-loop power control command for the scheduling service transmission and a closed-loop power control command for the non-scheduling service transmission on the carrier.

2. The method of claim 1, further comprising:

   the UE having both the scheduling service and the non-scheduling service on the same carrier, and if transmissions of both the scheduling service and the non-scheduling service pause and a duration when both the scheduling service and the non-scheduling service are in the pause state is longer than or equals to a time threshold Tgap (601), the UE performing open-loop power control when the transmission of one of the scheduling service and the non-scheduling service is resumed (403), and using Enhanced Physical Uplink Channel (E-PUCH) reference expected receiving power $PRX_{des\_base}$ for the carrier configured by a high layer as the $P_{e\text{-}base}$ value and then entering the closed-loop power control (404).

3. The method of claim 1, further comprising:

   the UE having both the scheduling service and the non-scheduling service on the same carrier, and if one of the scheduling service and non-scheduling service pauses, or both the scheduling service and non-scheduling service pause and a duration when both of the scheduling service and the non-scheduling service are in the pause state is shorter than a time threshold Tgap (602), the UE using a $P_{e\text{-}base}$ value latest stored for the carrier to perform the closed-loop power control when transmission of the scheduling service or non-scheduling service is resumed (405).

4. The method of claim 2 or 3, wherein said Tgap is determined by the UE itself or is configured by a high layer of network.

5. The method of claim 1, 2 or 3, wherein the specific process of the UE maintaining said $P_{e\text{-}base}$ comprises the following steps of:

   101, the UE performing open-loop power control when initially transmitting an Enhanced Physical Uplink Channel (E-PUCH), and setting said $P_{e\text{-}base}$ value as a reference expected receiving power $PRX_{des\_base}$ of the carrier on which the UE sends the E-PUCH, the reference expected receiving power $PRX_{des\_base}$ being configured by a high layer of network for the UE;

   102, after entering the closed-loop power control, when the UE performs transmission of the scheduling service, the $P_{e\text{-}base}$ being controlled by a Transmitting Power Control (TPC) command on an Enhanced Dedicated Channel (E-DCH) Absolute Grant Channel (E-AGCH), and when the UE performs transmission of the non-scheduling service, the $P_{e\text{-}base}$ being controlled by a TPC command on an E-DCH Hybrid Automatic Repeat Request Indication Channel (E-HICH).

6. The method of claim 5, wherein in said step 101, when the UE initially transmits the E-PUCH, the scheduling service or the non-scheduling service is transmitted.

7. The method of claim 5, wherein in the step 102, when the TPC command is "UP", a step length is added to said $P_{e\text{-}base}$ and when the TPC command is "DOWN", a step length is subtracted from said $P_{e\text{-}base}$, and the UE stores a $P_{e\text{-}base}$ value adjusted according to a latest TPC command.

8. The method of claim 7, wherein said step length is configured by a high layer of network to the UE.

9. The method of claim 5, wherein in a multi-carrier system, the high layer of network configures a reference expected receiving power $PRX_{des\_base}$ for E-PUCH(s) on each carrier to the UE, and the UE maintains a $P_{e\text{-}base}$ value for each working carrier.

10. The method of claim 1, wherein for a working carrier corresponding to the UE, Node B maintains a $P_{e\text{-}base}$ value, which is the same as that in the UE.

**Patentansprüche**

1. Ein Verfahren zum Steuern einer verbesserten Uplink-Leistung, **dadurch gekennzeichnet, dass** es Folgendes beinhaltet:

   wenn ein Dienst auf der Basis eines verbesserten Uplink-Zugriffs ausgeführt wird, Aufrechterhalten, durch ein Benutzergerät (*userequipment,* UE), eines gleichen einen $P_{e\text{-}base}$-Werts einer Leistungssteuerung mit geschlossenem Regelkreis für sowohl eine planmäßige Dienstübertragung als auch eine nicht planmäßige Dienstübertragung unter Verwendung einer gleichen Trägerressource, wobei der $P_{e\text{-}base}$-Wert sowohl durch einen Befehl der Leistungssteuerung mit geschlossenem Regelkreis für die planmäßige Dienstübertragung als auch einen Befehl der Leistungssteuerung mit geschlossenem Regelkreis für die nicht planmäßige Dienstübertragung auf dem Träger gesteuert wird.

2. Verfahren gemäß Anspruch 1, das ferner Folgendes beinhaltet:
   Aufweisen, durch das UE, sowohl des planmäßigen Dienstes als auch des nicht planmäßigen Dienstes auf dem gleichen Träger und, wenn Übertragungen sowohl des planmäßigen Dienstes als auch des nicht planmäßigen Dienstes aussetzen und wenn eine Dauer, wenn sich sowohl der planmäßige Dienst als auch der nicht planmäßige Dienst in dem Aussetzzustand befinden, länger oder gleich einem Zeitschwellenwert Tgap (601) ist, Ausführen, durch das UE, einer Leistungssteuerung mit offenem Regelkreis, wenn die Übertragung von einem von dem planmäßigen Dienst und dem nicht planmäßigen Dienst wieder aufgenommen wird (403), und Verwenden der Referenz erwarteter Empfangsleistung $PRX_{des\_base}$ des verbesserten physikalischen Uplink-Kanals (E-PUCH) für den Träger, die durch eine hohe Schicht als $P_{e\text{-}base}$-Wert konfiguriert ist, und dann Eintreten in die Leistungssteuerung mit geschlossenem Regelkreis (404).

3. Verfahren gemäß Anspruch 1, das ferner Folgendes beinhaltet:
   Aufweisen, durch das UE, sowohl des planmäßigen Dienstes als auch des nicht planmäßigen Dienstes auf dem gleichen Träger und, wenn einer von dem planmäßigen Dienst und nicht planmäßigen Dienst aussetzt oder sowohl der planmäßige Dienst als auch der nicht planmäßige Dienst aussetzen und wenn eine Dauer, wenn sich sowohl der planmäßige Dienst als auch der nicht planmäßige Dienst in dem Aussetzzustand befinden, kürzer als ein Zeitschwellenwert Tgap (602) ist, Verwenden, durch das UE, eines $P_{e\text{-}base}$-Werts, der zuletzt für den Träger gespeichert wurde, um die Leistungssteuerung mit geschlossenem Regelkreis auszuführen, wenn die Übertragung des planmäßigen Dienstes oder nicht planmäßigen Dienstes wieder aufgenommen wird (405).

4. Verfahren gemäß Anspruch 2 oder 3, wobei der Tgap durch das UE selbst bestimmt wird oder durch eine hohe Netzwerkschicht konfiguriert wird.

5. Verfahren gemäß Anspruch 1, 2 oder 3, wobei der spezifische Prozess des Aufrechterhaltens, durch das UE, des $P_{e\text{-}base}$ die folgenden Schritte beinhaltet:

   101, Ausführen, durch das UE, einer Leistungssteuerung mit offenem Regelkreis, wenn anfänglich ein verbesserter physikalischer Uplink-Kanal (E-PUCH) übertragen wird, und Festlegen des $P_{e\text{-}base}$-Werts als eine Referenz erwarteter Empfangsleistung $PRX_{des\_base}$ des Trägers, auf dem das UE den E-PUCH sendet, wobei die Referenz erwarteter Empfangsleistung $PRX_{des\_base}$ durch eine hohe Netzwerkschicht für das UE konfiguriert wird;
   102, nach dem Eintreten in die Leistungssteuerung mit geschlossenem Regelkreis, wenn das UE die Übertragung des planmäßigen Dienstes ausführt, Steuern des $P_{e\text{-}base}$ durch einen Übertragungsleistungsregelungs(TPC)-Befehl auf einem verbesserten dedizierten Kanal (E-DCH) absoluten Erteilungskanal (E-AGCH), und wenn das UE die Übertragung des nicht planmäßigen Dienstes ausführt, Steuern des $P_{e\text{-}base}$ durch einen TPC-Befehl auf einem E-DCH automatischen Hybridwiederholungsaufforderungs-Anzeigekanal (E-HICH).

6. Verfahren gemäß Anspruch 5, wobei in dem Schritt 101, wenn das U E anfänglich den E-PUCH überträgt, der planmäßige Dienst oder der nicht planmäßige Dienst übertragen wird.

7. Verfahren gemäß Anspruch 5, wobei in dem Schritt 102, wenn der TPC-Befehl "UP" ist, eine Schrittlänge zu dem $P_{e\text{-}base}$ hinzugefügt wird, und wenn der TPC-Befehl "DOWN" ist, eine Schrittlänge von dem $P_{e\text{-}base}$ subtrahiert wird, und das UE einen $P_{e\text{-}base}$-Wert speichert, der gemäß einem letzten TPC-Befehl eingestellt ist.

8. Verfahren gemäß Anspruch 7, wobei die Schrittlänge durch eine hohe Netzwerkschicht für das UE konfiguriert wird.

9. Verfahren gemäß Anspruch 5, wobei in einem Mehrträgersystem die hohe Netzwerkschicht eine Referenz erwarteter Empfangsleistung $PRX_{des\_base}$ für E-PUCH(s) auf jedem Träger für die UE konfiguriert, und das UE einen $P_{e\text{-}base}$-Wert für jeden arbeitenden Träger aufrechterhält.

10. Verfahren gemäß Anspruch 1, wobei der Knoten B für einen arbeitenden Träger, der dem UE entspricht, einen $P_{e\text{-}base}$-Wert aufrechterhält, welcher der gleiche wie der in dem UE ist.

**Revendications**

1. Une méthode pour contrôler une puissance de liaison montante améliorée, **caractérisée par** le fait de comprendre : lorsqu'un service est effectué sur la base d'un accès de liaison montante améliorée, le fait qu'un équipement utilisateur (UE) maintient une même valeur de contrôle de puissance en boucle fermée $P_{e\text{-}base}$ pour à la fois une transmission de service d'ordonnancement et une transmission de service de non ordonnancement en utilisant une même ressource de porteuse, la valeur $P_{e\text{-}base}$ étant contrôlée par à la fois une commande de contrôle de puissance en boucle fermée pour la transmission de service d'ordonnancement et une commande de contrôle de puissance en boucle fermée pour la transmission de service de non ordonnancement sur la porteuse.

2. La méthode de la revendication 1, comprenant en outre : le fait que l'UE a à la fois le service d'ordonnancement et le service de non ordonnancement sur la même porteuse, et si des transmissions à la fois du service d'ordonnancement et du service de non ordonnancement se mettent en pause et si une durée lorsqu'à la fois le service d'ordonnancement et le service de non ordonnancement sont dans l'état de pause est plus longue ou égale à un seuil de temps Tgap (601), le fait que l'UE effectue un contrôle de puissance en boucle ouverte lorsque la transmission d'un service parmi le service d'ordonnancement et le service de non ordonnancement reprend (403), et utilise une puissance de réception attendue de référence $PRX_{des\_base}$ de canal de liaison montante physique améliorée (E-PUCH, Enhanced Physical Uplink Channel) pour la porteuse configurée par une couche élevée comme valeur $P_{e\text{-}base}$ et ensuite entre dans le contrôle de puissance en boucle fermée (404).

3. La méthode de la revendication 1, comprenant en outre : le fait que l'UE a à la fois le service d'ordonnancement et le service de non ordonnancement sur la même porteuse, et si un service parmi le service d'ordonnancement et le service de non ordonnancement se met en pause, ou si à la fois le service d'ordonnancement et le service de non ordonnancement se mettent en pause et si une durée lorsqu'à la fois le service d'ordonnancement et le service de non ordonnancement sont dans l'état de pause est plus courte qu'un seuil de temps Tgap (602), le fait que l'UE utilise une valeur $P_{e\text{-}base}$ stockée en dernier pour que la porteuse effectue le contrôle de puissance en boucle fermée lorsque la transmission du service d'ordonnancement ou du service de non ordonnancement soit reprise (405).

4. La méthode de la revendication 2 ou de la revendication 3, dans laquelle ledit Tgap est déterminé par l'UE lui-même ou est configuré par une couche élevée de réseau.

5. La méthode de la revendication 1, de la revendication 2 ou de la revendication 3, dans laquelle le procédé spécifique consistant en ce que l'UE maintient ladite $P_{e\text{-}base}$ comprend les étapes suivantes consistant en ce que :

  101, l'UE effectue un contrôle de puissance en boucle ouverte lors de la transmission initiale d'un canal de liaison montante physique améliorée (E-PUCH), et établit ladite valeur $P_{e\text{-}base}$ comme une puissance de réception attendue de référence $PRX_{des\_base}$ de la porteuse sur laquelle l'UE envoie l'E-PUCH, la puissance de réception attendue de référence $PRX_{des\_base}$ étant configurée par une couche élevée de réseau pour l'UE ;
  102, après l'entrée dans le contrôle de puissance en boucle fermée, lorsque l'UE effectue la transmission du service d'ordonnancement, la $P_{e\_base}$ est contrôlée par une commande de contrôle de puissance de transmission (TPC, Transmitting Power Control) sur un canal d'attribution absolu (E-AGCH, Absolute Grant Channel) de canal dédié amélioré (E-DCH, Enhanced Dedicated Channel), et lorsque l'UE effectue la transmission du service de non ordonnancement, la $P_{e\text{-}base}$ est contrôlée par une commande TPC sur un canal d'indication de demande de répétition automatique hybride (E-HICH, Hybrid Automatic Repeat Request Indication Channel) d'E-DCH.

6. La méthode de la revendication 5, dans laquelle, à ladite étape 101, lorsque l'UE transmet initialement l'E-PUCH, le service d'ordonnancement ou le service de non ordonnancement est transmis.

7. La méthode de la revendication 5, dans laquelle à l'étape 102, lorsque la commande TPC est « UP », une longueur d'étape est ajoutée à ladite $P_{e\text{-base}}$ et lorsque la commande TPC est « DOWN », une longueur d'étape est soustraite de ladite $P_{e\text{-base}}$, et l'UE stocke une valeur $P_{e\text{-base}}$ ajustée selon une dernière commande TPC.

8. La méthode de la revendication 7, dans laquelle ladite longueur d'étape est configurée par une couche élevée de réseau à l'UE.

9. La méthode de la revendication 5, dans laquelle dans un système à ondes porteuses multiples, la couche élevée de réseau configure une puissance de réception attendue de référence $PRX_{des\_base}$ pour un ou des E-PUCH sur chaque porteuse à l'UE, et l'UE maintient une valeur $P_{e\text{-base}}$ pour chaque porteuse de travail.

10. La méthode de la revendication 1, dans laquelle pour une porteuse de travail correspondant à l'UE, un Noeud B maintient une valeur $P_{e\text{-base}}$, qui est la même que celle dans l'UE.

```
┌─────────────────────────────┐
│    Receiving TPC command    │
└─────────────────────────────┘
```

"UP"  "DOWN"

```
┌──────────────────┐        ┌──────────────────┐
│ A step length is │        │ A step length is │
│ added to Pe-base │        │ subtracted from  │
│                  │        │     Pe-base      │
└──────────────────┘        └──────────────────┘
```

FIG. 1

```
┌──────────────────┐
│   TPC on E-AGCH  │
└──────────────────┘
         │
         ▼
┌──────────────────┐
│ Pe-base for the  │
│ scheduling service│
└──────────────────┘
```

FIG. 2(a)

```
┌──────────────────┐
│   TPC on E-HICH  │
└──────────────────┘
         │
         ▼
┌────────────────────┐
│  Pe-base for the   │
│non-scheduling service│
└────────────────────┘
```

FIG. 2(b)

| TPC command on E-AGCH | TPC command on E-HICH |

Pe-base

## FIG. 2(c)

Node B scheduling | E-AGCH | E-AGCH | E-AGCH | E-AGCH

UE transmits E-PUCH | E-PUCH | 301 Open loop | E-PUCH | 302 ... Closed loop | E-PUCH | 303 Open loop | 304 Closed loop | E-PUCH

≥ Tgap | < Tgap

## FIG. 3

Node B scheduling | E-AGCH | E-AGCH

Transmission of the scheduling service | E-PUCH | 402 ... Closed loop | 405 Closed loop | E-PUCH

E-HICH for the non-scheduling service | E-HICH | E-HICH | E-HICH

Transmission of the non-scheduling service | E-PUCH | 401 Open loop | ... | E-PUCH | 403 Open loop | E-PUCH | 404 Closed loop

≥ Tgap | < Tgap

## FIG. 4

Node B scheduling

| | E-AGCH | |

Transmission of the
scheduling service

| E-PUCH | 504
Closed loop |

E-HICH for the
non-scheduling
service

| E-HICH | | E-HICH | | E-HICH | | E-HICH |

Transmission
of the
non-scheduling
service

| E-PUCH | 501
Open
loop | | E-PUCH | 502
Closed loop | ... | E-PUCH | 503
Closed loop | ... | E-PUCH | 505
Closed
loop |

## FIG. 5

Transmission of the
scheduling service

| | E-PUCH | ... | | | E-PUCH |

Transmission
of the
non-scheduling
service

| E-PUCH | | ... | E-PUCH | | E-PUCH | ... | |

≥ Tgap 601          < Tgap 602

## FIG. 6

**EP 2 184 863 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004203981 A1